# EUROPEAN PATENT APPLICATION

(11) **EP 1 965 294 A1**
(43) Date of publication of application: **03.09.2008**
(21) Application number: 07004389.8
(22) Date of filing: 02.03.2007
(51) Int. Cl.: G06F 3/048

(54) **Apparatus and method for generating a graphical user interface**

(71) Applicant: Nero AG, 76307 Karlsbad (DE)
(72) Inventor: Owerfeldt, Carsten, 76275 Ettligen (DE); Klein, Peter, Dr., 74357 Bönnigheim (DE)
(74) Representative: Zinkler, Franz

(57) **Abstract**

On a graphical user interface for a file transfer from a file source to a file destination, a display window has a first area and a second area separated from the first area, wherein icons of different sources or sinks of information are indicated in the first area (20) and in the second area (22). A user can input a user input directed to an icon (24, 26) in the first area (20) and in the second area (22) in response to the user selection of two icons in the different areas, and information area is displayed for each icon, wherein the information area is larger than the icon itself. One of the devices/websites selected is the file source and the other selected device/website is the file destination. A user-selected file is transferred from the file source to the file destination displayed by the source information area and the destination information area.

## Description

The present invention relates to a graphical user interface and, particularly, to graphical user interfaces usable in the context of a file transfer from a file source to a file destination.

Recently, the number of hardware devices, which can be connected to a personal computer, increases more and more. These hardware devices include not only mobile phones or digital cameras. Additional devices are audio and/or video player, camcorders, personal digital assistants such as a palm or mobile navigation devices. All these devices typically have an interface to transmit and/or receive files to or from a computer. Within the computer, there also exist several sources or sinks of information such as a hard disc fixedly attached to the computer or a mobile hard disc or a disc drive. Furthermore, a computer also includes a "soft device". Such a soft devices is, within the computer, a certain directory such as the "my file directory", the "my pictures directory", etc. Additionally, remote information sinks or information sources are becoming more and more popular, such as websites connected to the computer via an intranet or the Internet. A very famous Internet website is You Tube. From this website, a user can download files. Additionally, a user can also upload files to this website. Similar websites also exist in chatrooms, etc, where participants can not only input text files but also picture files, audio files, or generally stated, multimedia files.

The high number of different information sources or information sinks makes it increasingly complicated for a user to have an overview over the files on the different devices. Although prices for memory chips are progressively decreasing, the sizes of files to be transferred from one place to another place rapidly increase. Thus, loading all files from any place to each other's devices is obviously not the solution to the problem of having an overview. Typically personal computers also do not have any memory limit anymore which can be experienced by the user. However, when it comes to mobile devices, the memory limits are very real for the user. Thus, a tightly controlled management of all mobile devices is necessary for a user to have maximum enjoyment from the devices.

On the other hand, computer users are more and more unwilling to study large volumes of manuals to become acquainted with the specific details of how one can download, or upload, files to and from a device. In other words, a user has to cope with an increasing amount of devices, be it software or hardware devices but is increasingly unwilling to always study a lengthy manual when she or he has acquired a new device, or has registered to a new website.

In view of this, these users are not willing to perform a file transfer using, for example the Windows Explorer, where a file transfer can only be done in a very uncomfortable manner, when a single Explorer is opened. Alternatively, a user could open two Explorers. Then a drag and drop operation between these two windows can be performed. However, this is only a method which is taken by more computer-educated users, but is, of course, a very uncomfortable manner of managing a file transfer, since two different windows have to be opened, two different windows have to be placed side by side. A further disadvantage is that the windows typically pop up on the screen in an overlapping manner and for each application on a different place on the monitor. Then, a user has to enter a typically long directory path to arrive at a certain location and has to find out a certain file in a very uncomfortable way.

When, for example, the way is considered in which photographs taken by a digital camera are managed, one will see that the file names are just numbers which are, of course, very tedious to cope with, and which do not allow any intuitive copy operation. Furthermore, the managing of two Explorer windows is very uncomfortable in that these windows appear different for each new operation when the computer was switched off before, and switched on later.

It is the object of the present invention to provide an improved concept for managing a file transfer in a manner, which is still comfortable for a user, even when the number of information sinks or sources continuously increases.

This object is achieved by an apparatus for generating a graphical user interface for a file transfer in accordance with claim 1 or by a method of generating a graphical user interface for a file transfer in accordance with claim 24, or by a computer program in accordance with claim 25.

The present invention is based on the finding that a single window, in which not only source targets, but also destination targets are shown in an intuitive manner, is the key for a user-friendly graphical user interface for managing a plurality of different information sources or information sinks. Particularly, the window includes a first area and a second area separated from the first area, wherein icons of different sources or sinks of information are indicated in the first and second areas. Thus, devices which can be sources and sinks of information are indicated in the window on the computer screen in the first area, as well as in the second area, i.e. twice. Then, the user can select one icon from the first area and another icon from the second area in order to establish file transfer between the information sources or sinks corresponding to the selected icons. In response to such a user selection, a display manipulator displays a first information including information on the source or sink of information corresponding to the first user-selected icon of the first area, wherein this first information area is larger than the icon itself. Furthermore, the display manipulator displays a second information area, including information on the source or sink of information corresponding to the second user-selected icon of the second area, the second information area being larger than the icon of the second area. Thereafter, a user can select a file included in a source of information represented by a selected icon and can transfer this file into a certain typically user-selected or pre-selected place of an information sink corresponding to the selected icon in the second areas.

Thus, a user, when starting the inventive graphical user interface has an easy overview over the connected devices/websites and can easily select an icon from each area to obtain a data exchange between those devices/websites corresponding to the selected icons. In preferred embodiments of the present invention, a user selection of an icon not only results in displaying the information area, but also results in displaying a content area. In this embodiment, the information area or fixed focus area always pops up at the same place in the window, irrespective of the position of the selected icon in the first or the second area. Furthermore, the size of this fixed focus area never changes, irrespective of the fact whether a second icon in the other area is selected or not. However, when only a single icon has been selected by the user, then the information area associated with this icon is displayed on a large area of the window, which, however, does not cover the icons of the other information area. Thus, the user has a maximum space for viewing the content of the selected device or website. When, however, the user then selects, for example, the file destination in the other area, then a fixed information area for this selected second device is displayed. Furthermore, an information area for this second device is also displayed and the information area from the already active device or website is displayed smaller. Now, the window displays two fixed source areas, two content areas having a reduced size compared to the situation, in which only a single content area is displayed, and preferably, transfer buttons between the content areas. This embodiment is very comfortable and well understood for a user, since the user can always find a good orientation by the fixed focus areas for the selected devices.

Further, the equal share of the available display resources for content areas for both devices provides the user with a maximum available overview of the contents in the source device and the available locations at the destination device.

In a further preferred embodiment of the present invention, the file transferer is operative to check compatibility of the source device and the target device, and probably performs a transcoding operation to automatically provide multimedia content in an optimum way for the target device, without embarrassing the user with error messages generated by incompatibility situations.

Preferred embodiments of the present invention are subsequently illustrated in connection with the attached drawings in which:
- Fig. 1: is a general scenario, in which a graphical user interface can be utilized;
- Fig. 2: is a block diagram of the graphical user interface;
- Fig. 3: is a specific embodiment of a method of generating a graphical user interface for a file transfer:

- Fig. 4a: is a plot of a start screen being generated by a display generator;
- Fig. 4b: is a plot of a start screen being generated by the display generator when a different set of devices are attached to a computer;
- Fig. 5: illustrates a screen shot of a situation in which a user has selected an icon in the source area; and
- Fig. 6: illustrates a screen shot as generated by the display manipulator, when a user has selected an icon in the source area and an icon in the destination area.

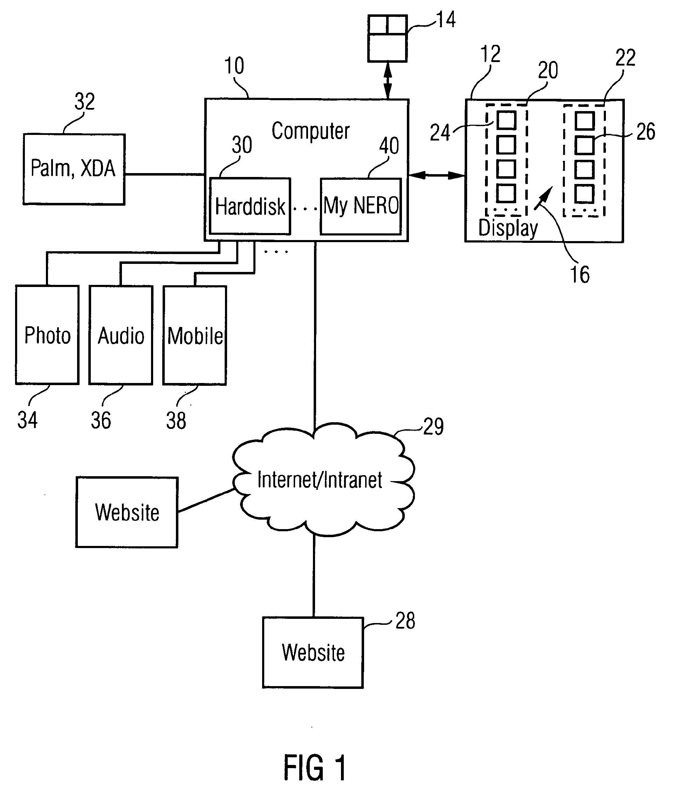

Fig. 1 illustrates a general setup of a situation in which the present invention can be advantageously utilized. Particularly, a computer 10 is illustrated which is connected to a display 12 and a mouse or generally to a pointer device 14. The pointer device is operative to navigate a display pointer 16 to any place on the display 12. Thereafter, an activation of a function indicated by a certain area of the device can be performed by, for example, clicking on a mouse button or activating an enter key or an activation key of track ball. Alternatively, the display can be implemented as a touch screen display so that a direct touch of a certain screen portion will result in an operation illustrated by the area of the display, which has been touched by the user.

As illustrated in Fig. 1, the display includes a display window having a first area 20 and a second area 22, which is separate from the first area 20. Furthermore, the first area 20 includes different icons 24. Moreover, the second area 22 also includes different icons 26. Each icon represents a different source or sink of information, actually connected to the computer or only connectable to a computer. Fig. 1 illustrates a plurality of different sources or sinks of information. Particularly, eight sources or sinks of information are illustrated. When all eight of these sources or sinks of information are connected to the computer, then the first area 20 and the second area 22 might display eight icons each. However, Fig. 1, in which only four icons 24, 26, 28, 30 are shown, illustrates the situation in which there is only one website, such as You Tube 28, connected via the Internet to the computer 10 and one hard disc 30, any external or "test" device 32, 34, 36, 38, as well as a "soft" source or sink of information indicated by My Nero 40, which can alternatively be illustrated as "myPC".

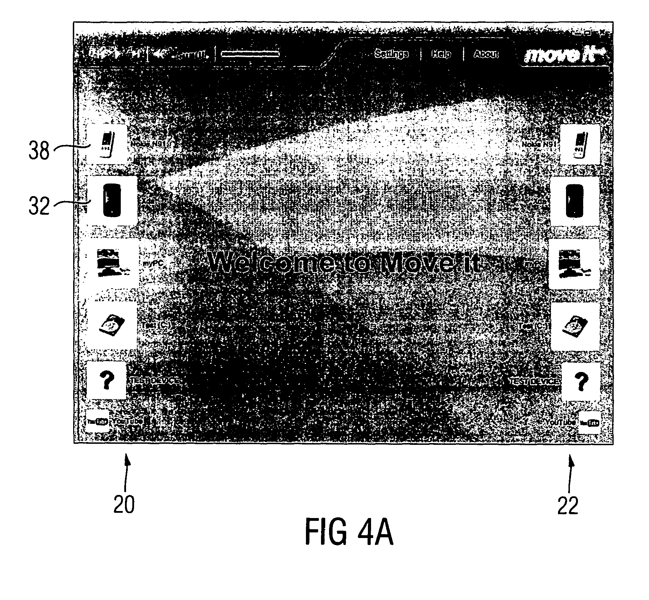

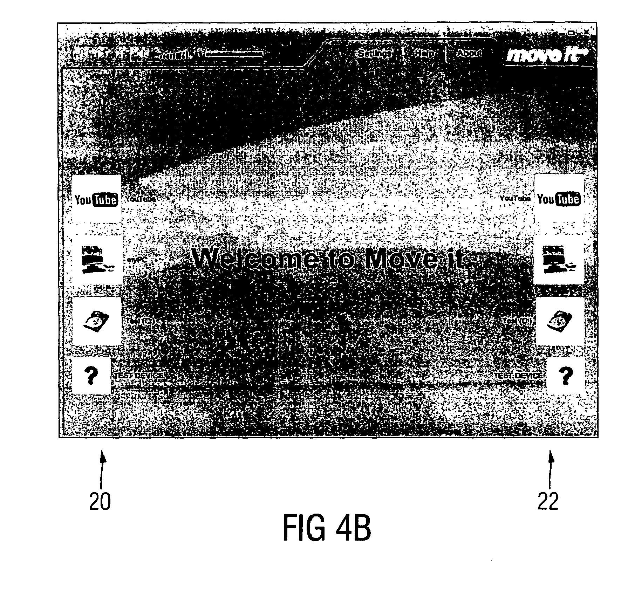

Thus, the above described situation corresponds to the situation in Fig. 4b, illustrating a start screen of the graphical user interface entitled "Mover It", in which there are the same four icons in each area 20, 22. Alternatively, reference is made to Fig. 4a, illustrating the situation, when six sources and sinks of information are connected to the computer, such as a mobile telephone 38, or a personal digital assistant such as the Xda 32. Alternative devices can be specific game devices such as a Game Boy or a PSP, which can also be provided with files or which can be useful for exporting files via a typical USB interface.

Generally, one could also attach an audio player such as a player for MP3 or MP4 files. Since these players typically can also be used for recording broadcasts content or recording voice in a Dictaphone application, these devices can also be sources of information rather than just a sink of information.

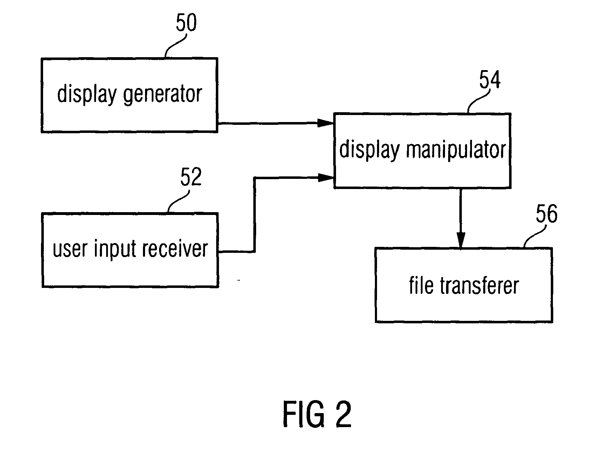

Fig. 2 illustrates a block diagram of an inventive apparatus for generating a graphical user interface for a file transfer from a file source to a file destination. The apparatus includes a display generator 50 for generating a display window as shown in Fig. 1 or as shown in Figs. 4a and 4b, which has a first area 20 and a second area 22 separated from the first area, wherein icons 24 of different sources or sinks of information are indicated in the first area 20 and in the second area 22. Preferably, the display generator receives an operating system notification on the devices or websites connected to the computer when the graphical user interface program is started. When the user does not have an active Internet connection, then locally connected devices will be indicated as icons 24, 26. When, however, the user already has an active Internet connections, websites can be incorporated by a specific icon into the first area 20, as well as into the second area 22. It is also preferred that only active or actively connected information sources or sinks are indicated in the first area 20 and the second area 22. Alternative embodiments also include additional icons for non-connected devices, but these icons are marked, for example, by a gray color, etc., so that the user knows that he/she can not select this device as a file source or a file destination.

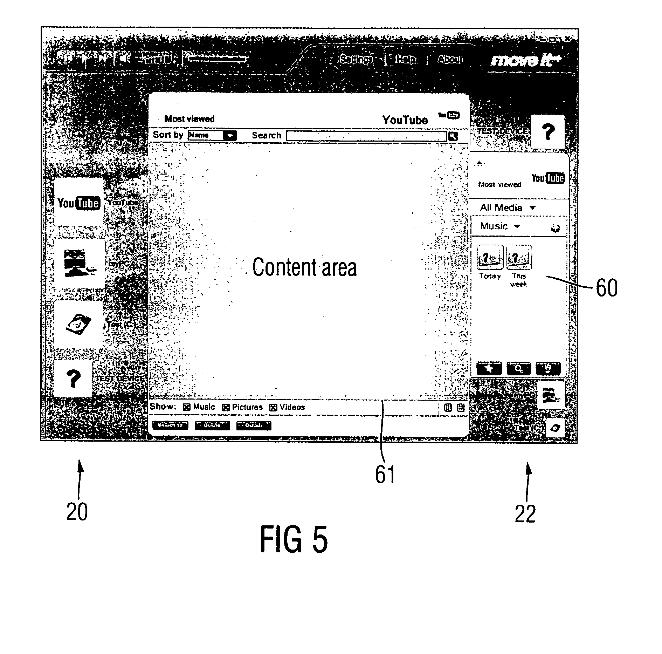

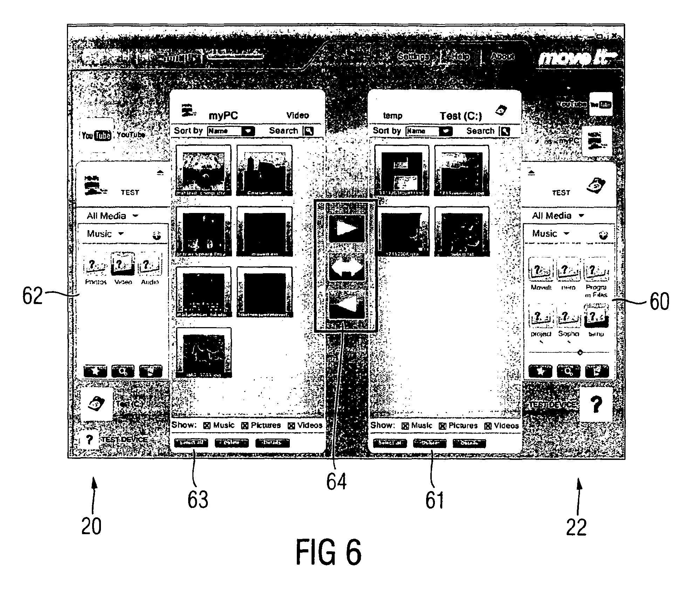

The apparatus for generating a graphical user interface further includes a user input receiver 52 for receiving a user input directed to a user-selected icon in the first area 20 and the second area 22. In response to the selected icons, a display manipulator 54 displays a first information area 60 (see Fig. 6) including information on the source or sink of information for responding to a first user selected icon, such as a test hard disc drive shown in Fig. 6. Particularly, the first information area 60 is larger than the icon for the selected device, as for example, shown in Fig. 4b. Furthermore, the display manipulator is adapted to display, in addition to the first information area, a second information area 62, including information on the source or sink of information corresponding to the second user-selected icon of the other area which is the test device illustrated in Figs. 4b or 5.

Again, the second information area 62 is displayed larger than the icon of the second area selected, i.e. is indicated to be larger than the myPC device icon selected by the user.

In a preferred embodiment, the non-selected icons in the first and the second area which are You Tube, test C: and test device in the left part of the Fig. 6 and which are You Tube, myPC and test device on the right part of Fig. 6 are still visible and are not covered. This makes sure that the user can re-change his/her selection for the purpose of changing a source or a destination for a file transfer.

The apparatus for generating a graphical user interface furthermore includes a file transferer 56 for transferring a file from the file source to the file destination. The file transferer 56 preferably operates in response to the user-activation of a transfer button in the transfer button field 64. This transfer button field includes the first button for transferring a file from left to right, a second button for synchronizing the content of the selected device from the first area and the selected device from the second area. In this context, it is to be noted that synchronizing means that both information sources have the same content with respect to a certain directory or a certain category, when the synchronization operation has been successfully completed. The third button is the button for copying or generally transferring a file from right to left.

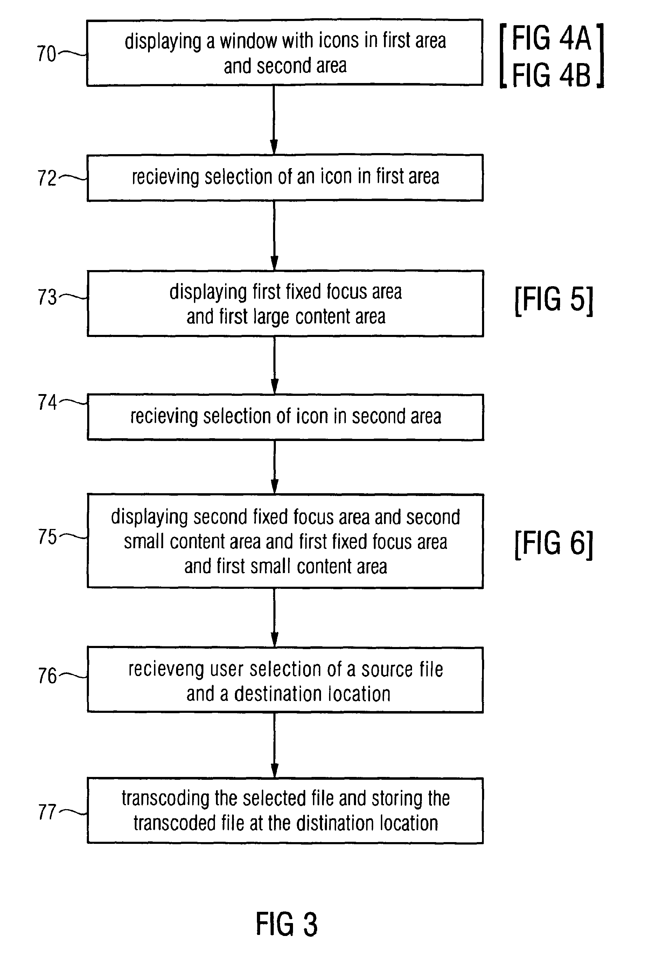

Subsequently, a preferred embodiment of the present invention will be discussed in connection with the flow chart of Fig. 3.

The graphical user interface generally uses a fish-eye view as the main navigation concept. As illustrated in Figs. 4a and 4b, source and target devices are displayed on the left and the right-hand sides. Selecting a device in any of these columns/areas will automatically set the focus to this device. This means that the device icon will be moved to the middle of the column and the icon size will be increased. At the same time, the content of the device is preferably displayed in a separate content area. As the application is launched, all devices connected to the user's computer will be displayed in two columns on the right and the left side, as indicated by step 70 in Fig. 3. The user can now chose as to which column will be the source and which one will be the target by merely working from left to right or from right to left.

As illustrated in step 72, the user now selects a source device by clicking on the device icon. The user input receiver 52 of Fig. 2 of the graphical use interface receives the selection of the certain icon in the first area, which can be area 22, i.e. the right area in Fig. 4a, or which can be area 20, which is the left area in Fig. 4b.

Regarding Fig. 5, the situation is shown in which the user has selected You Tube in the first area 22 to the right-hand side of the screen. The focus will now be set to the selected device, which means that the information area will be displayed in the middle of the area 22. More specifically, the display manipulator 54 now displays the first fixed focus area 60 and a first large content area 61. This large content area 61 displays the content of the device typically on a file level. Thus, separate files, which can be pictures, audio tracks, videos or photos, are displayed, preferably as graphical icons as well. In the smaller fixed focus area 60, only general categories are displayed, which categories are audio, video, photos, etc. However, the fixed content area does not include a display of the content of the selected device on a file level, but only a higher-level display. This is due to the fact that the area of the fixed focus area 60 is limited and that the fixed focus area always has the same physical dimensions on the screen and also appears at the same place, irrespective of whether the icon selected is e.g. the first or the last icon in the column. When Fig. 5 and Fig. 4b are compared, it becomes clear that the fixed focus area 64 You Tube appears in the middle of the column, i.e. below the test device and above myPC and the test hard disc drive C:.

Furthermore, it becomes clear from Fig. 5 that the icons become smaller and smaller when they are more far apart from the fixed focus area. To be more specific, the icon for test (C:) is smaller than myPC or test device. For example, this also becomes clear from Fig. 6 where the test device icon in area 20 is smaller than the You Tube icon or the test (C:) icon. In area 22, the You Tube icon is smaller than myPC icon or the test device icon.

It has been discovered that the organization of the graphical user interface into a fixed focus area 60 and a content area 61, wherein the fixed focus area 60 always has the same place in the middle of the area 22 and, particularly, always has the same size in connection with the content area having a variable size, is user comfortable. If too many details are displayed on a screen and if there are too many variations from screen to screen, an inexperienced user in computer skills will be overwhelmed by so many details. In accordance with the embodiments shown in Figs. 5 or 6, however, the user can always fix her or his focus on the fixed focus area in area 22 or area 20, and the user can start exploring the content of the selected device from this fixed reference point using the large content area 61, which is the result of step 73 of Fig. 3.

If the user has decided that the selected device represented by areas 60 and 61 is the correct source or destination device, then he can click onto any icon in area 20 on the left-hand side of the display. The user input receiver 52 now receives the user selection of an icon in the second area 20, as shown in step 74. The display manipulator 54 again manipulates the display by showing the information area 62 in the left area 20 as a fixed focus area centered in the middle of area 20. Again, information area 62 is a fixed focus area for the second file transfer participant, which is the myPC source/sink of information.

In this "soft" location, there are different categories of data, such as photos, video and audio. Again, the fixed focus area shows a higher-level content display, and the actual content area 63 belonging to the fixed focus area 62 provides a content display on the file level. As can be seen from Fig. 6, the content area 61 is now displayed as a smaller content area to make room for the second content area 63, corresponding to the fixed focus area 62. The result of step 75 in Fig. 3 is, therefore, illustrated in Fig. 6. The user can now select a source file and the destination location by selecting a certain file in the content area of the source and by selecting a certain folder in the content area of the destination device, as indicated by step 76 in Fig. 3.

In response to this user selection, the file transferer 56 illustrated in Fig. 2 preferably performs a transcoding of the selected file and the subsequent storing of the transcoded file at the destination location, as indicated by step 77. More specifically, the devices connected to the computer might not be compatible to each other. One device can be an MP3 player and another device can be an MP4 player. The transferer is then operative to transcode the MP3 file into an MP4 file before transferring the file. Alternatively, the transcoder will be operative to transcode an MP4 file into an MP3 file before storing the transcoded file on the MP3 hardware player.

A similar operation will be performed when there are video formats, which are not compatible to each other.

Furthermore, an advantageous display size adaptation can be performed for photos, pictures or video material, since mobile devices will typically have a smaller display than a large computer screen. Therefore, a very efficient data computation without any disadvantages for the user can be performed by downsampling or decimating a video or photo content to the screen size of the destination device. Furthermore, depending on a bandwidth available from the Internet or Intranet 29 in Fig. 1, higher scaling layers can be truncated from a file before the file is transmitted e.g. to the remote Website 28. Thus, it is made sure that all selections of the user for the file transfer from one device to another device can be fulfilled without any embarrassment for the user due to any incompatibility situations or no bandwidth situations.

Regarding Fig. 6, it is to be emphasized that the user can use the transfer buttons 64 for performing a file transfer or the user can perform a file transfer via drag and drop. When the transfer buttons 64 are used, then the user has to select a file in the source area before the transfer button can be activated.

Depending on certain implementation requirements of the inventive methods, the inventive methods can be implemented in hardware or in software. The implementation can be performed using a digital storage medium, in particular a disk, DVD or a CD having electronically readable control signals stored thereon, which cooperate with a programmable computer system such that the inventive methods are performed. Generally, the present invention is, therefore, a computer program product with a program code stored on a machine readable carrier, the program code being operative for performing the inventive methods when the computer program product runs on a computer. In other words, the inventive methods are, therefore, a computer program having a program code for performing at least one of the inventive methods when the computer program runs on a computer.

While the foregoing has been particularly shown and described with reference to particular embodiments thereof, it will be understood by those skilled in the art that various other changes in the form and details may be made without departing from the scope thereof. It is to be understood that various changes may be made in adapting to different embodiments without departing from the broader concepts disclosed herein and comprehended by the claims that follow.

## Claims

1. Apparatus for generating a graphical use interface for a file transfer from a file source to a file destination, comprising:
a display generator (50) for generating a display window having a first area (20) and a second area (22) separated from the first area (20), wherein icons (24, 26) of different sources or sinks of information are displayed in the first area (20) and in the second area (22);
a user input receiver (52) for receiving a user input directed to a user-selected icon in the first area (20) and in the second area (22);
a display manipulator (54) for displaying a first information area (62) including information on the source or sink of information corresponding to a first user-selected icon of the first area (20), the first information area (62) being larger than the first user selected icon, and for displaying a second information area (60) including information on the source or sink of information corresponding to a second user-selected icon of the second area (22), the second information area (60) being larger than the second user selected icon of the second information area (22),
wherein the first source or sink of information corresponding to the first information area (62) and the second source or sink of information corresponding to the second information area (60) represent a file source or a file destination; and
a file transferer (56) for transferring a file from the file source to the file destination.

2. Apparatus of claim 1, in which the source of sink of information is a hardware device (32, 34, 36, 38) connected to a computer system or an upload/download website (28) remotely positioned from the computer and connectable to the computer by an Intranet or the Internet, or is a specific file directory stored on the hard disc drive of a computer.

3. Apparatus of claim 1, in which the first area (20) is a strip positioned at a left border of the window, and the second area (22) is a strip positioned at a right border of the window, and wherein the strips do not overlap each other.

4. Apparatus of claim 1, in which the first area is a strip positioned at an upper border of the window and the second area is a strip positioned at a lower border of the window, and wherein the strips do not overlap each other.

5. Apparatus in accordance with any one of the preceding claims, in which the display generator (50) is adapted to display an icon in the first area (20) and in the second area (22) for each connected device or Website or specific directory.

6. Apparatus in accordance with one of the preceding claims, in which the display generator (50) is operative to also display an icon for a non-connected, but connectable device or Website in the first area (20) or the second area (22), wherein the icon is different from an icon for an actually connected device or Website.

7. Apparatus in accordance with one of the preceding claims, in which the user-input receiver (52) is operative to receive two sequential inputs from a user, and
in which the file transfer (56) is operative to use, as the file source, the source or sink of information corresponding to the icon earlier selected by the user and to use, as the file destination, the source or sink of information corresponding to the icon later selected by the user.

8. Apparatus in accordance with one of the preceding claims, in which the display generator (50) is operative to generate the display having at least three icons in the first area (20) or the second area (22), and in which the display manipulator (54) is adapted to display the information area corresponding to a selected icon in the area (20, 22) between the non-selected icons.

9. Apparatus in accordance with claim 8, in which the display manipulator (54) is operative to display the information area (60, 62) corresponding to a selected icon at a location centered in the corresponding first area (20) or second area (22).

10. Apparatus in accordance with one of the preceding claims, in which the display manipulator (54) is operative to display, for a selected icon, a content area (61, 63) in addition to the information area (60, 62), the content area covering more space of the window than the information area (60, 62).

11. Apparatus in accordance with one of the preceding claims, in which the display manipulator (54) is operative to display the information area (60, 62) as a fixed focus area illustrating content information on a higher level than a file level, wherein the fixed focus area (60, 62) remains on the same position on the window and has the same size even when an additional fixed focus area corresponding to an icon from the other area (20, 22) of the first area (20) and the second area (22) is displayed in the window.

12. Apparatus in accordance with one of the preceding claims, in which the display manipulator (54) is operative to display the information area corresponding to a selected icon, so that all other icons of the area are still visible on the window.

13. Apparatus in accordance with one of the preceding claims, in which the display generator (50) is operative to display an icon more close to the information area (60, 62) corresponding to a selected icon larger than an icon less close to the information area (60, 62).

14. Apparatus in accordance with one of the preceding claims, in which the display manipulator (54) is operative to display one or more transfer buttons (64) between the first area (20) and the second area (22) when a user-selection of an icon from each area has been received.

15. Apparatus in accordance with claim 14, in which the transfer button (64) comprises an arrow pointing from the first area into the second area or an arrow pointing from the second area into the first area or a synchronization arrow pointing into both areas (20, 22).

16. Apparatus in accordance with claim 10, in which the display manipulator (54) is operative to display the content area (61) on a larger portion of the window when the user input receiver (52) has received a selection of a first icon, wherein the content area is so that any icons of the other area (20) are not covered, and
in which the display manipulator (54) is operative to display the content area (61) on a smaller portion of the window when the user input receiver (52) has received a second selection of a second icon from the other area (20), so that the display manipulator (54) displays a fixed focus area (60, 62) and a content area (61, 63) for both selected icons from the first area (20) and the second area (22).

17. Apparatus in accordance with claim 10,
in which the display manipulator (54) is operative to display, in the content area (61, 63), a content of the source or sink of information on a file level, and
to display, in the information area (60, 62) the content on a higher level than the file level.

18. Apparatus in accordance with claim 17, in which the higher level distinguishes between categories of digital content.

19. Apparatus in accordance with claim 18, in which the categories comprise an audio category, a video category or a picture category.

20. Apparatus in accordance with claim 18 or 19, in which the categories comprise a places category, a peoples category or an events category.

21. Apparatus in accordance with one of the preceding claims, in which the file transferer (56) is operative to move or copy a user-selected file to the file destination.

22. Apparatus in accordance with one of claims 1 to 20, in which the file transferer (56) is operative to determine whether the user-selected file is compatible to a file destination, and to transcode the user-selected file to obtain a transcoded file so that the transcoded file is compatible to the file destination, and to move the transcoded file to the file destination.

23. Apparatus in accordance with claim 22, in which the file transferer (56) is operative to transcode, from a first coding algorithm into a second coding algorithm or to delete a scaling layer or to reduce a spatial or time resolution of a video or picture file or to reduce a time or frequency resolution or a bandwidth or a quantization of an audio file.

24. Method of managing a file transfer from a file source to a file destination, comprising:
generating (50) a display window having a first area (20) and a second area (22) separated from the first area (20), wherein icons (24, 26) of different sources or sinks of information are displayed in the first area (20) and in the second area (22);
receiving (52)a user input directed to a user-selected icon in the first area (20) and in the second area (22);
displaying (54) a first information area (62) including information on the source or sink of information corresponding to a first user-selected icon of the first area (20), the first information area (62) being larger than the first user selected icon, and displaying a second information area (60) including information on the source or sink of information corresponding to a second user-selected icon of the second area (22), the second information area (60) being larger than the second user selected icon of the second information area (22),
wherein the first source or sink of information corresponding to the first information area (62) and the second source or sink of information corresponding to the second information area (60) represent a file source or a file destination; and
transferring (56) a file from the file source to the file destination.

25. Computer program having a program code for performing the method in accordance with claim 24, when the computer program runs on a computer.
